# EUROPÄISCHE PATENTSCHRIFT

(11) **EP 4 054 866 B1**
(45) Veröffentlichungstag und Bekanntmachung des Hinweises auf die Patenterteilung: **13.03.2024**
(21) Anmeldenummer: 20792336.8
(22) Anmeldetag: 12.10.2020
(51) Int. Cl.: B60C 15/024, B60C 13/00

(54) **FAHRZEUGLUFTREIFEN MIT FELGENSCHUTZRIPPE**
PNEUMATIC VEHICLE TYRE HAVING A RIM PROTECTION RIB
PNEU DE VÉHICULE DOTÉ D'UNE NERVURE DE PROTECTION DE JANTE

(30) Priorität: 04.11.2019 DE 102019216915
(43) Veröffentlichungstag der Anmeldung: 14.09.2022
(73) Patentinhaber: Continental Reifen Deutschland GmbH, 30175 Hannover (DE)
(72) Erfinder: ARENSMEIER, Jörg, 30165 Hannover (DE); MARSCHLER, Christian, 30165 Hannover (DE); NEUMANN, Marcel, 30165 Hannover (DE); PLÜCKERS, Matthias, 30165 Hannover (DE); RITTWEGER, Stefan, 30165 Hannover (DE); WIEGMANN, Florian, 30165 Hannover (DE)
(74) Vertreter: Continental Corporation
(86) Internationale Anmeldenummer: PCT/EP2020/078555
(87) Internationale Veröffentlichungsnummer: WO 2021/089275

(56) Entgegenhaltungen:
- EP-A1- 3 315 327
- EP-A1- 3 505 371
- EP-A2- 2 135 753
- DE-A1-102006 007 762
- JP-A- 2010 083 318
- JP-A- 2015 120 425
- US-A1- 2016 001 608
- US-B1- 6 536 494

## Beschreibung

Die Erfindung betrifft einen Fahrzeugluftreifen mit einem Laufstreifen, zwei Seitenwänden und zwei Wulstbereichen, wobei axial außen wenigstens auf einer Reifenseitenwand in Höhe des Wulstbereiches eine über den Umfang der Reifenseitenwand umlaufende Felgenschutzrippe angeordnet, wobei im Reifenquerschnitt betrachtet eine axial äußere Kontur der Felgenschutzrippe eine konkave Krümmung aufweist.

Felgenschutzrippen an Fahrzeugluftreifen sind im Stand der Technik bekannt. Die Felgenschutzrippe ist üblicherweise ein Keil aus Gummi, welcher einteilig mit der Seitenwand verbunden ist und auf der Seitenwand ringförmig über den Umfang dieser Seitenwand geschlossen umläuft. Die Felgenschutzrippe ragt dabei, wie auf die äußere Oberfläche der Seitenwand aufgesetzt, als Keil aus der Seitenwand nach axial außen heraus. Die Felgenschutzrippe ist in einer Reifenquerschnittshöhe zumindest auf der unteren Seitenwand in etwa in Höhe des Wulstbereiches derart angeordnet, dass diese bei einem auf das Rad aufgezogenen Reifen unmittelbar oberhalb des Felgenhornes verläuft und sich axial zumindest gleich weit wie das Felgenhorn oder axial über das Felgenhorn hinaus erstreckt, um das Felgenhorn und die Felge vor seitlichen Scheuerkontakten, wie beispielsweise Bordsteinkontakten, zu schützen, indem die Felgenschutzrippe diese Kontakte abfängt.

Bekannt sind Felgenschutzrippen, die in einem konkaven Radius auf die Seitenwand aufgesetzt sind. Bei "aufgesetzten" Felgenschutzrippen mit nur einem konkaven Radius hat sich jedoch gezeigt, dass die Steifigkeit in radialer Richtung zu gering ist. Zudem ist die Geometrie einer solchen Felgenschutzrippe ungünstig für die Herstellung einer Negativform des Seitenwandbereichs des Reifens für eine formgebende Vulkanisationsform, da auch bis in den axial breitesten Punkt der Felgenschutzrippe Beschriftung durch Fräsen aufgebracht werden muss. Hier fehlt dann ausreichend Raum für den Verfahrweg eines Fräswerkzeugs.

Die DE 102008028780 A1 schlägt hierzu vor, dass die Kontur der Felgenschutzrippe von einem oberen Ende der Seitenwand bis zum unteren Ende der Felgenschutzrippe nur konvex und/oder gerade ausgebildet ist, wodurch die Dicke der Gesamtkonstruktion nach radial innen hin stärker zunimmt. Nachteil davon ist, dass die Seitenwand auf Höhe des Reifenäquators versteift wird und dadurch weniger flexibel ist. Durch diese ungleichmäßige Verteilung der Steifigkeit der Felgenschutzrippe in radialer Richtung entstehen Spannungsspitzen im oberen Bereich der Seitenwand. Hierdurch kann die Haltbarkeit des Reifens herabgesetzt sein. Zudem ist eine solche Konstruktion mit einem Mehraufwand an Material und einer für die Einfederung ungünstigen Materialverteilung verbunden. Auch führt eine Skalierung der axialen Breite der Felgenschutzrippe zu einer starken Erhöhung der Menge an eingesetztem Material und damit des Rollwiderstands.

Ein gattungsgemäßer Reifen ist aus der US6536494 B1 bekannt.

Es ist daher die Aufgabe der vorliegenden Erfindung, einen Fahrzeugluftreifen bereitzustellen, der eine verbesserte Haltbarkeit aufweist und der eine Skalierung der axialen Breite der Felgenschutzrippe mit nur geringen Auswirkungen auf den Rollwiderstand und die Haltbarkeit ermöglicht.

Die Aufgabe wird dadurch gelöst, dass im Reifenquerschnitt betrachtet, die axial äußere Kontur der Felgenschutzrippe radial außen mit einem tangential an eine axial äußere Kontur der Seitenwand angrenzenden konvex gekrümmten ersten Bereich, der sich in seiner Krümmung von einer radial außerhalb an die Felgenschutzrippe anschließenden Krümmung der Seitenwand unterscheidet, beginnt, dass der erste Bereich nach radial innen hin tangential in einen konkav gekrümmten zweiten Bereich übergeht, dass der zweite Bereich tangential in einen konvex gekrümmten dritten Bereich übergeht und dass der dritte Bereich tangential in einen vierten Bereich, der den axial äußersten Punkt der Felgenschutzrippe umfasst, übergeht.

Erfindungswesentlich ist, dass die axial äußere Kontur der Felgenschutzrippe eine Abfolge an unterschiedlich gekrümmten Bereichen aufweist. Hierdurch ergibt sich ein S-Schlag in der äußeren Kontur radial außerhalb des breitesten Punktes der Felgenschutzrippe.

Der konvex gekrümmte erste Bereich ermöglicht dabei die Regulierung der Erstreckung der Felgenschutzrippe nach radial außen.

Der konkav gekrümmte zweite Bereich ermöglicht eine gleichmäßigere Materialverteilung in radialer Richtung, insbesondere radial außerhalb des Reifenäquators. Dies führt zum einen zu einem für den Rollwiderstand vorteilhaften geringeren Materialeinsatz, verglichen mit einer Felgenschutzrippe ohne konkave Krümmung wie aus dem Stand der Technik bekannt. Zum anderen führt eine gleichmäßigere Materialverteilung der Felgenschutzrippe in radialer Richtung zu einer gleichmäßigeren Steifigkeitsverteilung des Seitenwand insbesondere radial außerhalb des Reifenäquators, was wiederum zu einer gleichmäßigeren Verformung der Seitenwand bei Einfederung führt. Hierdurch kann die Dauerfestigkeit des Reifens weiter verbessert werden.

Der dritte Bereich aufweisend eine konvexe Krümmung ermöglicht radial innerhalb des Reifenäquators trotz des konkav gekrümmten zweiten Bereichs weiterhin eine vorteilhafte radiale Dicke der Felgenschutzrippe bei gleichzeitig begrenzter axialer Breite bis hin zum axial äußersten Bereich der Felgenschutzrippe innerhalb des vierten Bereichs. Die hierdurch ermöglichte radiale Steifigkeit radial innerhalb des Reifenäquators ermöglicht eine vorteilhafte Schutzwirkung der Felgenschutzrippe gegenüber dem Felgenhorn.

Es ist somit nicht nur Material reduziert, sondern auch eine verbesserte Verteilung der Steifigkeit der Rippe in radialer Richtung ermöglicht, wodurch der Schub- und Spannungsverlauf, insbesondere radial außerhalb des Reifenäquators, verbessert ist. Hieraus ergibt sich ein vorteilhaftes Einfederungsverhalten. Gleichzeitig ist hierdurch die Gefahr von Rissbildungen oder von Brüchen verringert, wodurch die Haltbarkeit des Reifens verbessert ist.

Ein weiterer Vorteil ist dadurch gegeben, dass durch den S-Schlag bei einer Skalierung der axialen Breite der Felgenschutzrippe nur geringe Änderungen in der Materialmenge und der Materialverteilung der Felgenschutzrippe radial außerhalb des Reifenäquators nötig ist. Hierdurch ist die Auswirkung einer Skalierung der axialen Breite der Felgenschutzrippe auf den Rollwiderstand und die Haltbarkeit gering.

Noch ein Vorteil des S-Schlags besteht darin, dass bei der Herstellung einer Negativform des Seitenwandbereichs des Reifens für eine formgebende Vulkanisationsform auch im dritten und vierten Bereich ausreichend Raum für den Verfahrweg eines Fräswerkzeugs zur Verfügung steht. Hierdurch steht auch der dritte und vierte Bereich für eine Beschriftung zur Verfügung.

Die vier Bereiche gehen jeweils tangential ineinander über, wodurch eine axial äußere Kontur der Felgenschutzrippe frei von Knicken ermöglicht ist. Ein solch glatter Übergang zwischen den Bereichen mit unterschiedlichem Krümmungsverhalten vermeidet Spannungsspitzen und weist eine vorteilhafte Aerodynamik auf.

Der Beschreibung des erfindungsgemäßen Reifens wird der nicht auf die Felge aufgezogene vulkanisierte Reifen zugrunde gelegt. Die Querschnittshöhe des Fahrzeugluftreifens bemisst sich von der äußeren Laufflächenoberfläche bis zur Querschnittshöhe des nominalen Felgendurchmessers. Der Reifenäquator verläuft dabei senkrecht zur radialen Richtung auf halber Querschnittshöhe des Reifens.

Die Felgenschutzrippe ist ganz oder zumindest teilweise Teil der Seitenwand. Die Bezeichnung der Krümmung als konkav oder konvex gekrümmt bezieht sich auf eine Blickrichtung von axial außen auf die Reifenoberfläche.

Eine vorteilhafte Ausführungsform ist dadurch gegeben, dass, im Reifenquerschnitt von radial außen nach radial innen betrachtet, die Dicke der Seitenwand über eine Höhenerstreckung von mindestens 1/3 der Höhe der Seitenwand radial außerhalb des Reifenäquators weitgehend konstant ist und dabei 2 mm bis 5 mm, insbesondere in etwa 3 mm, beträgt.

Durch die geringe Dickenvariation der Seitenwand radial außerhalb des Reifenäquators ist eine noch gleichmäßigere Steifigkeitsverteilung erwirkt, was zu einer gleichmäßigeren Verformung des Reifens bei Einfederung führt. Durch die geringere Materialbeanspruchung ist somit eine verbesserte Haltbarkeit erreichbar.

Die Höhe der Seitenwand radial außerhalb des Äquators ist dabei gemessen vom Reifenäquator bis zum radial innersten Ende eines Gürtelverbunds aus Gürtellagen und Bandage. Die Dicke der Seitenwand ist gemessen axial außerhalb der Karkasse senkrecht zur Karkasse.

Eine weitere vorteilhafte Ausführungsform ist dadurch gegeben, dass die Höhe der Felgenschutzrippe 14 mm bis 21 mm, bevorzugt 17 mm bis 21 mm, besonders bevorzugt 19 mm bis 21 mm, beträgt, wobei die Höhe vom axial äußersten Punkt der Felgenschutzrippe nach radial außen gemessen ist und dass die Felgenschutzrippe radial außerhalb des Reifenäquators eine Höhenerstreckung von 0 mm bis maximal 8 mm aufweist.

Sowohl die Höhe der Felgenschutzrippe ist begrenzt als auch der durch die Felgenschutzrippe verdickte Bereich des Reifens ist nach radial außen hin begrenzt, wodurch eine vorteilhafte Steifigkeitsverteilung des Reifens im Seitenwandbereich sowie ein geringer Materialeinsatz ermöglicht ist. Die Felgenschutzrippe kann, je nach Reifengröße, auch komplett radial innerhalb des Reifenäquators angeordnet sein und somit eine Höhenerstreckung von 0 mm radial außerhalb des Reifenäquators aufweisen.

Eine vorteilhafte Ausführungsform ist auch dadurch gegeben, dass der erste Bereich in einem ersten Wendepunkt an den zweiten Bereich angrenzt, wobei der erste Wendepunkt in einem radialen Abstand vom axial äußersten Punkt der Felgenschutzrippe von 10 mm bis 17 mm angeordnet ist und dass der zweite Bereich in einem zweiten Wendepunkt an den dritten Bereich angrenzt, wobei der zweite Wendepunkt in einem radialen Abstand vom axial äußersten Punkt der Felgenschutzrippe von 4 mm bis 6 mm angeordnet ist.

Derartige radiale Abmessungen der Kontur haben sich als besonders vorteilhaft für Haltbarkeitseigenschaften sowie die Skalierbarkeit der Felgenschutzrippe gezeigt. Vorteilhaft ist es auch, wenn der erste Bereich als Kreisbogen, bevorzugt als Kreisbogen mit Radius R1 von 40 mm bis 200 mm, ausgebildet ist.

Ein derartiger konvex gekrümmter Übergangskreisbogen von der Seitenwandkontur zur Felgenschutzrippenkontur hat sich als vorteilhaft zur Regulierung und Begrenzung der Erstreckung der Felgenschutzrippe nach radial außen herausgestellt. Besonders vorteilhaft ist es dabei, wenn der Kreisbogen den Radius R1 aufweist. Der Kreisbogen geht nach radial außen bevorzugt tangential in die Kontur der Seitenwand über.

Erfindungsgemäß ist der zweite Bereich als Kreisbogen mit einem Radius R2 von 30 mm bis 40 mm, bevorzugt von 34 mm bis 36 mm, ausgebildet.

Ein derartiger konkav gekrümmter Kreisbogen mit Radius R2 ermöglicht eine besonders vorteilhafte Materialverteilung sowie einen besonders vorteilhafte radiale Steifigkeitsverteilung.

Eine weitere vorteilhafte Ausführungsform ist dadurch gegeben, dass der dritte Bereich als Kreisbogen mit einem Radius R3 von 8 mm bis 12 mm, bevorzugt von in etwa 10 mm, ausgebildet ist.

Durch einen derartig konvex gekrümmten Kreisbogen mit Radius R3 ist ein besonders vorteilhafter Übergang zu dem vierten Bereich aufweisend den axial äußersten Punkt gegeben. Hierdurch ist eine für die Schutzwirkung der Felgenschutzrippe vorteilhafte radiale Steifigkeit radial innerhalb des Reifenäquators ermöglicht. Gleichzeitig ist bei der Herstellung einer entsprechenden Negativform für den Reifenbau ausreichend Platz für den Verfahrweg eines Fräswerkzeugs, so dass die axial äußere Oberfläche des Reifens auch radial innerhalb des dritten Bereichs für eine Beschriftung zur Verfügung steht.

Eine vorteilhafte Ausführungsform ist auch dadurch gegeben, dass der vierte Bereich nach radial innen hin vom axial äußersten Punkt begrenzt ist und dabei eine Höhe von 1,8 mm bis 3 mm, bevorzugt von in etwa 2 mm, aufweist.

Bei der Herstellung einer entsprechenden Negativform für den Reifenbau steht durch eine solche Anordnung, insbesondere durch die ausreichende Höhe des vierten Bereichs, ausreichend Platz für den Verfahrweg eines Fräswerkzeugs zur Verfügung. Somit steht die axial äußere Oberfläche des Reifens auch noch radial innerhalb des dritten Bereichs für eine Beschriftung zur Verfügung.

Eine vorteilhafte Ausführungsform ist dadurch gegeben, dass es sich um einen Radialreifen für einen Personenkraftwagen, bevorzugt mit einem Höhe zu Breite -Verhältnis von 25% bis 65%, handelt.

Die Verwendung von Felgenschutzrippen bei der genannten Reifenart ist besonders vorteilhaft, da diese Reifen im Markt häufig Kontakt zu z.B. Bordsteinkanten oder ähnlichen Hindernissen haben und die Felgen entsprechend geschützt werden müssen. Die Erfindung eignet sich aber auch für andere Fahrzeugluftreifen aufweisend eine Felgenschutzrippe.

Weitere Merkmale, Vorteile und Einzelheiten der Erfindung werden anhand der Zeichnungen, die schematische Ausführungsbeispiele darstellen, näher erläutert. Es zeigen die
Fig. 1 einen Teil-Querschnitt des erfindungsgemäßen Fahrzeugluftreifens;
Fig. 2 und Fig. 3 jeweils eine Vergrößerung eines Teil-Querschnittes eines erfindungsgemäßen Fahrzeugluftreifens.

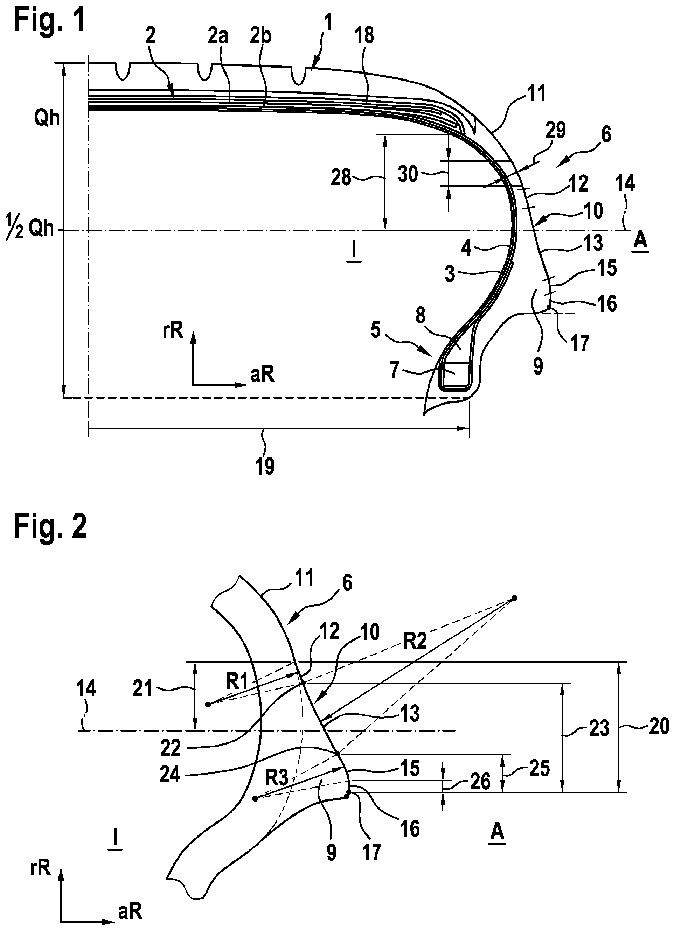

Die **Fig. 1** zeigt einen Teil-Querschnitt durch einen Radialreifen für Personenkraftwagen, welcher einen profilierten Laufstreifen 1, einen aus zwei Lagen 2a, 2b, bestehenden Gürtel 2, welcher durch eine Bandage 18 abgedeckt ist, eine Radialkarkasse 3, eine luftdicht ausgeführte Innenschicht 4, Seitenwände 6 sowie Wulstbereiche 5 mit Wulstkernen 7 und Kernprofilen 8 aufweist. Axial außen A ist zumindest auf einer Reifenseitenwand 6 oberhalb des Wulstbereiches 5 eine über den Umfang der Reifenseitenwand 6 umlaufende Felgenschutzrippe 9 angeordnet. Die Felgenschutzrippe 9 ist ganz oder teilweise Teil der Seitenwand 6.

Im Reifenquerschnitt betrachtet, beginnt eine axial äußere Kontur 10 der Felgenschutzrippe 9 radial außen mit einem tangential an eine axial äußere Kontur 11 der Seitenwand 6 angrenzenden konvex gekrümmten ersten Bereich 12, der sich in seiner Krümmung von einer radial außerhalb an die Felgenschutzrippe 9 anschließenden Krümmung der Seitenwand 6 unterscheidet.

Der erste Bereich 12 geht nach radial innen hin tangential in einen konkav gekrümmten zweiten Bereich 13 über. Der zweite Bereich 13 geht tangential in einen konvex gekrümmten dritten Bereich 15 über. Der dritte Bereich 15 geht tangential in einen vierten Bereich 16, der den axial äußersten Punkt 17 der Felgenschutzrippe 9 umfasst, über.

Die vier Bereiche 12,13,15,16 gehen jeweils tangential ineinander über, wodurch eine axial äußere Kontur der Felgenschutzrippe frei von Knicken ermöglicht ist. Die Querschnittshöhe Qh des Fahrzeugluftreifens bemisst sich von der äußeren Laufflächenoberfläche bis zur Querschnittshöhe des nominalen Felgendurchmessers, bei welchem die nominative Felgenbreite 19 bemessen ist.

Der Reifenäquator 14 verläuft senkrecht zur radialen Richtung rR auf halber Querschnittshöhe 1/2Qh des Reifens. Die Felgenschutzrippe 9 ist ganz oder zumindest teilweise Teil der Seitenwand 6. Die Bezeichnung der Krümmung als konkav oder konvex gekrümmt bezieht sich auf eine Blickrichtung von axial außen auf die Reifenoberfläche.

Es kann sich um einen Radialreifen für einen Personenkraftwagen, bevorzugt mit einem Höhe zu Breiteverhältnis von 25% bis 65% , handelt.

Die Dicke 29 der Seitenwand 6 kann über eine Höhenerstreckung 30 von mindestens 1/3 der Höhe 28 der Seitenwand radial außerhalb des Reifenäquators 14 weitgehend konstant sein und dabei 2 mm bis 5 mm, insbesondere in etwa 3 mm, betragen. Die Höhe 28 der Seitenwand radial außerhalb des Äquators 14 ist dabei gemessen vom Reifenäquator 14 bis zum radial innersten Ende eines Gürtelverbunds aus Gürtellagen 2a, 2b und Bandage 18. Die Dicke 29 der Seitenwand ist gemessen axial außerhalb der Karkasse 3 senkrecht zur Karkasse 3.

In der **Fig. 2** eine Vergrößerung eines Teil-Querschnittes einer beispielhaften Ausführungsform eines erfindungsgemäßen Fahrzeugluftreifens zumindest im Bereich der Felgenschutzrippe 9 dargestellt. Der Übersichtlichkeit halber ist nur die Kontur des Reifens dargestellt. Es kann sich um den in der Figur 1 dargestellten Fahrzeugluftreifen handeln.

Die Höhe 20 der Felgenschutzrippe 9 beträgt 14 mm bis 21 mm, bevorzugt 17 mm bis 21 mm, besonders bevorzugt 19 mm bis 21 mm, wobei die Höhe 20 vom axial äußersten Punkt 17 der Felgenschutzrippe nach radial außen gemessen ist. Gleichzeitig weist die Felgenschutzrippe 9 radial außerhalb des Reifenäquators 14 eine Höhenerstreckung 21 von 0 mm bis maximal 8 mm auf.

Der erste Bereich 12 grenzt in einem ersten Wendepunkt 22 an den zweiten Bereich 13 an, wobei der erste Wendepunkt 22 in einem radialen Abstand 23 von vom axial äußersten Punkt 17 der Felgenschutzrippe von 10 mm bis 17 mm angeordnet ist. Gleichzeitig grenzt der zweite Bereich 13 in einem zweiten Wendepunkt 24 an den dritten Bereich 15 an, wobei der zweite Wendepunkt 24 in einem radialen Abstand 25 vom axial äußersten Punkt 17 der Felgenschutzrippe von 4 mm bis 6 mm angeordnet ist.

Der erste Bereich 12 ist als Kreisbogen, bevorzugt als Kreisbogen mit Radius R1 von 40 mm bis 200 mm, ausgebildet. Das zum Kreisbogen gehörige Kreissegment ist strichliert dargestellt. Der zweite Bereich 13 ist als Kreisbogen mit einem Radius R2 von 30 mm bis 40 mm, bevorzugt von 34 mm bis 36 mm, ausgebildet. Der dritte Bereich 15 ist als Kreisbogen mit einem Radius R3 von 8 mm bis 12 mm, bevorzugt von in etwa 10 mm, ausgebildet.

Der vierte Bereich 16 ist nach radial innen hin vom axial äußersten Punkt 17 begrenzt und weist dabei eine Höhe 26 von 1,8 mm bis 3 mm, bevorzugt von in etwa 2 mm, auf.

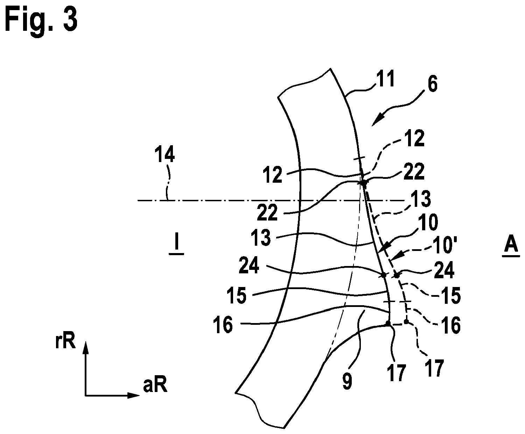

Die **Fig. 3** veranschaulicht die durch den S-Schlag ermöglichte vorteilhafte Skalierbarkeit der Felgenschutzrippe 9. Gezeigt ist ein Ausschnitt der axial äußeren Kontur 10, 11 eines Fahrzeugluftreifens. Es kann sich um die axial äußere Kontur des in der Fig. 2 gezeigten Ausschnitts handeln. Die gestrichelte Linie zeigt eine axial äußere Kontur 10', 11 bei Skalierung der Felgenschutzrippe 9 nach axial außen. Eine derartige Skalierung ist möglich, ohne dass die axial äußere Kontur 11 der Seitenwand 6 radial außerhalb der Felgenschutzrippe 9 geändert werden muss.

### Bezugszeichenliste

### (Teil der Beschreibung)

1 Laufstreifen
2 Gürtel
3 Karkasse
4 Innenschicht
5 Wulstbereich
6 Seitenwand
7 Wulstkern
8 Kernreiter
9 Felgenschutzrippe
10 axial äußere Kontur der Felgenschutzrippe
11 axial äußere Kontur der Seitenwand
12 erster Bereich
13 zweiter Bereich
14 Reifenäquator
15 dritter Bereich
16 vierter Bereich
17 axial äußerster Punkt der Felgenschutzrippe
18 Gürtelbandage
19 nominative Felgenbreite
20 Höhe
21 Höhenerstreckung
22 erster Wendepunkt
23 radialer Abstand
24 zweiter Wendepunkt
25 radialer Abstand
26 Höhe
28 Höhe
29 Dicke
30 Höhenerstreckung
Qh Querschnittshöhe des Reifens
rR radiale Richtung
aR axiale Richtung
A axial außen
I axial innen

## Patentansprüche

1. Fahrzeugluftreifen mit einem Laufstreifen (1), zwei Seitenwänden (6) und zwei Wulstbereichen (5), wobei axial außen (A) zumindest auf einer Reifenseitenwand (6) in Höhe oder oberhalb des Wulstbereiches (5) eine über den Umfang der Reifenseitenwand umlaufende Felgenschutzrippe (9) angeordnet ist, wobei im Reifenquerschnitt betrachtet eine axial äußere Kontur (10,10') der Felgenschutzrippe (9) eine konkave Krümmung aufweist,
**dadurch gekennzeichnet, dass,**
im Reifenquerschnitt betrachtet, die axial äußere Kontur (10,10') der Felgenschutzrippe (9)
• radial außen mit einem tangential an eine axial äußere Kontur (11) der Seitenwand (6) angrenzenden konvex gekrümmten ersten Bereich (12), der sich in seiner Krümmung von einer radial außerhalb an die Felgenschutzrippe (9) anschließenden Krümmung der Seitenwand (6) unterscheidet, beginnt,
• dass der erste Bereich (12) nach radial innen hin tangential in einen konkav gekrümmten zweiten Bereich (13) übergeht,
• dass der zweite Bereich (13) tangential in einen konvex gekrümmten dritten Bereich (15) übergeht und dass der zweite Bereich (13) als Kreisbogen mit einem Radius R2 von 30 mm bis 40 mm ausgebildet ist
• und dass der dritte Bereich (15) tangential in einen vierten Bereich (16), der den axial äußersten Punkt (17) der Felgenschutzrippe (9) umfasst, übergeht.

2. Fahrzeugluftreifen nach Anspruch 1, **dadurch gekennzeichnet, dass**, im Reifenquerschnitt von radial außen nach radial innen betrachtet, die Dicke (29) der Seitenwand (6) über eine Höhenerstreckung (30) von mindestens 1/3 der Höhe (28) der Seitenwand radial außerhalb des Reifenäquators (14) weitgehend konstant ist und dabei 2 mm bis 5 mm, insbesondere in etwa 3 mm, beträgt.

3. Fahrzeugluftreifen nach einem der vorangehenden Ansprüche, **dadurch gekennzeichnet, dass** die Höhe (20) der Felgenschutzrippe (9) 14 mm bis 21 mm, bevorzugt 17 mm bis 21 mm, besonders bevorzugt 19 mm bis 21 mm, beträgt, wobei die Höhe (20) vom axial äußersten Punkt (17) der Felgenschutzrippe nach radial außen gemessen ist und dass die Felgenschutzrippe (9) radial außerhalb des Reifenäquators (14) eine Höhenerstreckung (21) von 0 mm bis maximal 8 mm aufweist.

4. Fahrzeugluftreifen nach einem der vorangehenden Ansprüche, **dadurch gekennzeichnet, dass** der erste Bereich (12) in einem ersten Wendepunkt (22) an den zweiten Bereich (13) angrenzt, wobei der erste Wendepunkt (22) in einem radialen Abstand (23) vom axial äußersten Punkt (17) der Felgenschutzrippe von 10 mm bis 17 mm angeordnet ist und dass der zweite Bereich (13) in einem zweiten Wendepunkt (24) an den dritten Bereich (15) angrenzt, wobei der zweite Wendepunkt (24) in einem radialen Abstand (25) vom axial äußersten Punkt (17) der Felgenschutzrippe von 4 mm bis 6 mm angeordnet ist.

5. Fahrzeugluftreifen nach einem der vorangehenden Ansprüche, **dadurch gekennzeichnet, dass** der erste Bereich (12) als Kreisbogen, bevorzugt als Kreisbogen mit Radius R1 von 40 mm bis 200 mm, ausgebildet ist.

6. Fahrzeugluftreifen nach einem der vorangehenden Ansprüche, **dadurch gekennzeichnet, dass** der zweite Bereich (13) als Kreisbogen mit einem Radius R2 von 34 mm bis 36 mm ausgebildet ist.

7. Fahrzeugluftreifen nach einem der vorangehenden Ansprüche, **dadurch gekennzeichnet, dass** der dritte Bereich (15) als Kreisbogen mit einem Radius R3 von 8 mm bis 12 mm, bevorzugt von in etwa 10 mm, ausgebildet ist.

8. Fahrzeugluftreifen nach einem der vorangehenden Ansprüche, **dadurch gekennzeichnet, dass** der vierte Bereich (16) nach radial innen hin vom axial äußersten Punkt (17) begrenzt ist und dabei eine Höhe (26) von 1,8 mm bis 3 mm, bevorzugt von in etwa 2 mm, aufweist.

9. Fahrzeugluftreifen nach einem der vorangehenden Ansprüche, **dadurch gekennzeichnet, dass** es sich um einen Radialreifen für einen Personenkraftwagen, bevorzugt mit einem Höhe zu Breiteverhältnis von 25% bis 65% , handelt.

## Claims

1. Pneumatic vehicle tyre having a tread (1), two sidewalls (6) and two bead regions (5), wherein axially on the outside (A) at least on one tyre sidewall (6) at the level of or above the bead region (5) there is a rim protection rib (9) running around the circumference of the tyre sidewall, wherein, as viewed in the tyre cross section, an axially outer contour (10, 10') of the rim protection rib (9) has a concave curvature,
**characterized in that,**
as viewed in the tyre cross section, the axially outer contour (10, 10') of the rim protection rib (9)
• begins radially on the outside with a convexly curved first region (12) which tangentially adjoins an axially outer contour (11) of the sidewall (6) and differs in its curvature from a curvature of the sidewall (6) adjoining the rim protection rib (9) radially on the outside,
• **in that** the first region (12) merges radially inward tangentially into a concavely curved second region (13),
• **in that** the second region (13) merges tangentially into a convexly curved third region (15) and **in that** the second region (13) is designed as a circular arc with a radius R2 of 30 mm to 40 mm,
• and **in that** the third region (15) merges tangentially into a fourth region (16) encompassing the axially outermost point (17) of the rim protection rib (9).

2. Pneumatic vehicle tyre according to Claim 1, **characterized in that**, as viewed in the tyre cross section radially inward from radially on the outside, the thickness (29) of the sidewall (6) is substantially constant over a height extent (30) of at least 1/3 of the height (28) of the sidewall radially outside the tyre equator (14) and is 2 mm to 5 mm, in particular approximately 3 mm.

3. Pneumatic vehicle tyre according to either of the preceding claims, **characterized in that** the height (20) of the rim protection rib (9) is 14 mm to 21 mm, preferably 17 mm to 21 mm, particularly preferably 19 mm to 21 mm, wherein the height (20) is measured radially outward from the axially outermost point (17) of the rim protection rib, and **in that** the rim protection rib (9) has a height extent (21) of 0 mm to a maximum of 8 mm radially outside the tyre equator (14).

4. Pneumatic vehicle tyre according to one of the preceding claims, **characterized in that** the first region (12) adjoins the second region (13) at a first turning point (22), the first turning point (22) being arranged at a radial distance (23) from the axially outermost point (17) of the rim protection rib of 10 mm to 17 mm, and **in that** the second region (13) adjoins the third region (15) at a second turning point (24), the second turning point (24) being arranged at a radial distance (25) from the axially outermost point (17) of the rim protection rib of 4 mm to 6 mm.

5. Pneumatic vehicle tyre according to one of the preceding claims, **characterized in that** the first region (12) is designed as a circular arc, preferably as a circular arc with a radius R1 of 40 mm to 200 mm.

6. Pneumatic vehicle tyre according to one of the preceding claims, **characterized in that** the second region (13) is designed as a circular arc with a radius R2 of 34 mm to 36 mm.

7. Pneumatic vehicle tyre according to one of the preceding claims, **characterized in that** the third region (15) is designed as a circular arc with a radius R3 of 8 mm to 12 mm, preferably of approximately 10 mm.

8. Pneumatic vehicle tyre according to one of the preceding claims, **characterized in that** the fourth region (16) is delimited radially inward from the axially outermost point (17) and has a height (26) of 1.8 mm to 3 mm, preferably of approximately 2 mm.

9. Pneumatic vehicle tyre according to one of the preceding claims, **characterized in that** a radial tyre for a passenger car, preferably with a height-to-width ratio of 25% to 65%, is involved.

## Revendications

1. Pneumatique de véhicule avec une bande de roulement (1), deux parois latérales (6) et deux zones de talon (5), une nervure de protection de jante (9) s'étendant sur la circonférence de la paroi latérale de pneu étant agencée axialement à l'extérieur (A) au moins sur une paroi latérale de pneu (6) à hauteur ou au-dessus de la zone de talon (5), un contour axialement extérieur (10, 10') de la nervure de protection de jante (9), considéré dans la section transversale de pneu, présentant une courbure concave,
**caractérisé en ce que**
considéré dans la section transversale de pneu, le contour axialement extérieur (10, 10') de la nervure de protection de la jante (9)
- commence radialement à l'extérieur par une première zone (12) à courbure convexe adjacente tangentiellement à un contour axialement extérieur (11) de la paroi latérale (6), qui se distingue par sa courbure d'une courbure de la paroi latérale (6) se raccordant radialement à l'extérieur à la nervure de protection de jante (9),
- **en ce que** la première zone (12) se prolonge tangentiellement radialement vers l'intérieur par une deuxième zone (13) à courbure concave,
- **en ce que** la deuxième zone (13) se prolonge tangentiellement par une troisième zone (15) à courbure convexe et **en ce que** la deuxième zone (13) est réalisée sous forme d'arc de cercle ayant un rayon R2 de 30 mm à 40 mm,
- et **en ce que** la troisième zone (15) se prolonge tangentiellement par une quatrième zone (16) qui comprend le point axialement le plus extérieur (17) de la nervure de protection de jante (9).

2. Pneumatique de véhicule selon la revendication 1, **caractérisé en ce que**, dans la section transversale de pneu, considérée radialement de l'extérieur vers radialement à l'intérieur, l'épaisseur (29) de la paroi latérale (6), est essentiellement constante sur une étendue en hauteur (30) d'au moins 1/3 de la hauteur (28) de la paroi latérale radialement à l'extérieur de l'équateur de pneu (14) et est de 2 mm à 5 mm, notamment d'environ 3 mm.

3. Pneumatique de véhicule selon l'une quelconque des revendications précédentes, **caractérisé en ce que** la hauteur (20) de la nervure de protection de jante (9) est de 14 mm à 21 mm, de préférence de 17 mm à 21 mm, de manière particulièrement préférée de 19 mm à 21 mm, la hauteur (20) étant mesurée à partir du point axialement le plus extérieur (17) de la nervure de protection de jante vers l'extérieur radialement et **en ce que** la nervure de protection de jante (9) présente radialement à l'extérieur de l'équateur de pneu (14) une extension en hauteur (21) de 0 mm à 8 mm au maximum.

4. Pneumatique de véhicule selon l'une quelconque des revendications précédentes, **caractérisé en ce que** la première zone (12) est adjacente à la deuxième zone (13) en un premier point d'inflexion (22), le premier point d'inflexion (22) étant agencé à une distance radiale (23) du point axialement le plus extérieur (17) de la nervure de protection de jante de 10 mm à 17 mm, et **en ce que** la deuxième zone (13) est adjacente à la troisième zone (15) en un deuxième point d'inflexion (24), le deuxième point d'inflexion (24) étant agencé à une distance radiale (25) du point axialement le plus extérieur (17) de la nervure de protection de jante de 4 mm à 6 mm.

5. Pneumatique de véhicule selon l'une quelconque des revendications précédentes, **caractérisé en ce que** la première zone (12) est réalisée sous forme d'arc de cercle, de préférence sous forme d'arc de cercle de rayon R1 de 40 mm à 200 mm.

6. Pneumatique de véhicule selon l'une quelconque des revendications précédentes, **caractérisé en ce que** la deuxième zone (13) est réalisée sous forme d'arc de cercle ayant un rayon R2 de 34 mm à 36 mm.

7. Pneumatique de véhicule selon l'une quelconque des revendications précédentes, **caractérisé en ce que** la troisième zone (15) est réalisée sous forme d'arc de cercle ayant un rayon R3 de 8 mm à 12 mm, de préférence d'environ 10 mm.

8. Pneumatique de véhicule selon l'une quelconque des revendications précédentes, **caractérisé en ce que** la quatrième zone (16) est délimitée radialement vers l'intérieur par le point axialement le plus extérieur (17) et présente une hauteur (26) de 1,8 mm à 3 mm, de préférence d'environ 2 mm.

9. Pneumatique de véhicule selon l'une quelconque des revendications précédentes, **caractérisé en ce qu'**il s'agit d'un pneu radial pour voiture particulière, de préférence avec un rapport hauteur/largeur de 25 % à 65 %.
